# FASCICULE DE BREVET EUROPEEN

(11) **EP 2 824 777 B1**
(45) Date de publication et mention de la délivrance du brevet: **23.03.2016**
(21) Numéro de dépôt: 14169769.8
(22) Date de dépôt: 26.05.2014
(51) Int. Cl.: H01S 3/042, H01S 3/04, H01S 3/06, H01S 3/02

(54) **Laser cristallin comportant un système de refroidissement du cristal par un liquide**
Laserkristall, der ein Kühlsystem für den Kristall mit einer Flüssigkeit umfasst
Crystalline laser comprising a system for cooling the crystal by a liquid

(30) Priorité: 10.07.2013 FR 1356767
(43) Date de publication de la demande: 14.01.2015
(73) Titulaire: COMMISSARIAT A L'ENERGIE ATOMIQUE ET AUX ENERGIES ALTERNATIVES, 75015 Paris (FR)
(72) Inventeur: Perin, Jean-Paul, 38180 SEYSSINS (FR)
(74) Mandataire: Cabinet Laurent & Charras

(56) Documents cités:
- US-A1- 2002 097 769
- US-A1- 2006 088 067
- US-B1- 6 339 605
- US-B2- 7 406 109

## Description

### DOMAINE DE L'INVENTION

L'invention a trait aux lasers cristallins, et plus particulièrement au refroidissement du cristal de tels lasers.

### ETAT DE LA TECHNIQUE

Comme cela est connu en soi, un laser cristallin comprend une cavité optique dans laquelle est logé un cristal dopé, usuellement sous la forme d'un barreau, servant de milieu amplificateur sous l'effet d'un pompage optique.

Un laser de forte puissance implique généralement un échauffement important du cristal en raison du faible rendement du pompage optique. Or, pour certaines applications, comme par exemple l'imagerie par rayon X, il est nécessaire de disposer d'une amplification la plus stable possible en température. En outre, on observe que le rendement du pompage optique est optimal lorsque la température du cristal est comprise entre 90K et 200K, gamme de températures qu'il est difficile d'atteindre sans prendre de précaution particulière concernant la température de cristal.

C'est pourquoi des systèmes de refroidissement du cristal d'un laser ont été envisagés.

Selon une première technique, le barreau de cristal est découpé en tranches et un gaz froid est mis en circulation entre les tranches du barreau. Une telle solution n'est envisageable que pour les très grands lasers en raison de la taille du système de refroidissement.

Selon une seconde technique, le cristal est maintenu au contact d'un support refroidi. Or, le maintien du cristal sur le support est réalisé à l'aide d'une colle, d'une graisse ou de l'indium, c'est-à-dire un matériau qui présente une grande différence de coefficient d'expansion thermique avec le cristal usuellement mis en oeuvre dans un laser. Sous l'effet de l'échauffement du cristal provoqué par le pompage optique, on observe de grandes différences de dilatation entre le cristal et le matériau utilisé pour le maintenir, ces différences de dilation finissant par fragiliser le matériau de maintien et par provoquer la désolidarisation du cristal et du support, et donc par provoquer au final un dysfonctionnement du système de refroidissement,

US 2002/097769 A1 divulgue un laser cristallin comportant un cristal dopé, et un système de refroidissement du cristal, où le système de refroidissement comporte: un support comportant une première et une deuxième faces; un dispositif de fixation du cristal sur la première face du support de manière à aménager une cavité hermétique entre une première face du cristal et la première face du support; un circuit d'alimentation de la cavité hermétique avec un gaz ou un liquide; et un dispositif de refroidissement de la seconde face du support.

### EXPOSE DE L'INVENTION

Le but de la présente invention est de proposer un système de refroidissement d'un cristal de laser qui garantisse un contact entre le cristal et le support de refroidissement lors de la déformation du cristal sans dégradation du système de refroidissement.

A cet effet, l'invention a pour objet un laser cristallin comprenant un cristal dopé, et un système de refroidissement du cristal. Selon l'invention, le système de refroidissement comporte :
▪ un support comportant une première et une deuxième faces ;
▪ un dispositif de fixation du barreau de cristal sur la première face du support de manière à aménager une cavité hermétique entre une première face du cristal et la première face du support ;
▪ un circuit d'alimentation de la cavité hermétique avec un gaz liquéfié ; et
▪ un dispositif de refroidissement de la seconde face du support.

En d'autres termes, le contact entre le cristal et le support refroidi est réalisé au moyen d'une lame de liquide sous pression qui compense efficacement la dilatation du cristal sous l'effet de son échauffement. Notamment, le gaz liquéfié présente une pression importante qui garantit un contact permanent de la lame liquide avec le cristal et le support refroidi. Par ailleurs, la lame de liquide définissant un joint « élastique », elle ne subit pas de dégradation lors de la déformation du cristal, de sorte que le système reste efficace même en cas de déformations répétées de celui-ci.

Selon un mode de réalisation, le dispositif de fixation comporte :
▪ une pièce logeant le barreau de cristal à distance de la première face du support et encadrant une deuxième face du barreau de cristal; et
▪ un joint souple logé entre la deuxième face du cristal et la pièce logeant celui-ci, le joint étant apte à se déformer sous l'effet d'une flexion du cristal selon la deuxième face du cristal.

En d'autres termes, le joint souple, par exemple un joint « piston », laisse le cristal libre fléchir sous l'effet du pompage optique, ce qui limite la fatigue mécanique du barreau et limite les aberrations optiques du laser.

Selon un mode de réalisation, la pression du gaz est choisie pour que le gaz liquéfié demeure liquide dans une gamme de températures comprise entre 70K et 200K, cette gamme de températures correspondant à la gamme privilégiée de fonctionnement d'un laser cristallin. De manière avantageuse, le gaz liquéfié est choisi pour rester liquide sur une large gamme de températures, avantageusement sur plus de 100K, notamment la gamme 90K -200K. En étant liquide sur une large gamme de températures, il est possible d'ajuster la température du cristal par refroidissement sans qu'il soit nécessaire de modifier les propriétés du gaz liquéfié.

Selon un mode de réalisation, le gaz compris dans le gaz liquéfié est en sous saturation. Notamment, le circuit d'alimentation de la cavité est apte à commander la pression du gaz de manière à définir une température de saturation dudit gaz supérieure d'au moins 50K à la température du gaz liquéfié.

On observe en effet que le liquide en sous saturation permet de transporter de manière efficace la chaleur qu'il reçoit. Ainsi pour une différence de 55K entre la température de refroidissement du support, et donc à l'équilibre avec la température du cristal, et la température de saturation du gaz liquéfié, il est possible d'évacuer des flux thermiques d'une puissance de 50W/cm².

Selon un mode de réalisation, le gaz liquéfié est du dioxygène, de l'éthane ou du propane, ces gaz présentant des températures de saturation très basses pour des pressions n'exerçant pas de contrainte excessive sur le cristal.

Selon un mode de réalisation, le circuit d'alimentation comporte un réservoir de stockage du gaz, un conduit débouchant dans la cavité hermétique et dans le réservoir, et une vanne agencée dans le conduit pour commander l'alimentation en gaz de la cavité. Le gaz peut ainsi être stocké sous sa forme gazeuse pour des conditions de pression et de température souhaitées, avantageusement à température ambiante, par exemple à 300 K, l'alimentation de la cavité se faisant par simple ouverture de la vanne.

Selon un mode de réalisation, le dispositif de refroidissement comporte :
▪ une cavité hermétique, la deuxième face du support formant une face de ladite cavité ; et
▪ un circuit d'alimentation de la cavité avec un fluide de température comprise entre 70 K et 200K, notamment du diazote liquide.

Un tel agencement est compact et présente un nombre réduit d'interfaces entre le cristal et la source froide.

Selon un mode de réalisation, une troisième face du cristal est libre et le laser comprend en outre :
▪ une enceinte hermétique, dans laquelle sont logés le cristal, le support et le dispositif de fixation ;
▪ un circuit de pompage de l'enceinte ; et
▪ une fenêtre transparente à un rayonnement utilisé pour le pompage optique, formée dans une paroi de l'enceinte en regard de la troisième face du cristal.

L'enceinte hermétique sous pression réduite, ou « cryostat », permet ainsi d'éviter de la condensation sur le cristal, tout en permettant le pompage optique du barreau au travers de la fenêtre prévue à cet effet en face du cristal.

Selon un mode de réalisation, l'épaisseur de la cavité hermétique entre le cristal non fléchi et le support est inférieure au millimètre, et de préférence inférieure à 15 micromètres. Plus particulièrement, l'épaisseur de la cavité, et donc la distance la première face du cristal et la première face du support est choisie faible de manière à réduire les gradients thermiques dans la cavité et donc réduire la température absolue du cristal.

### BREVE DESCRIPTION DES FIGURES

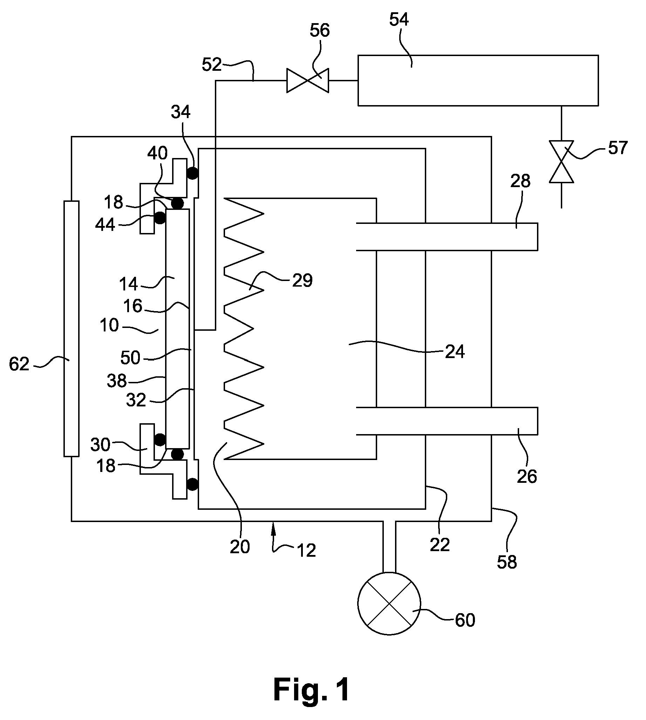

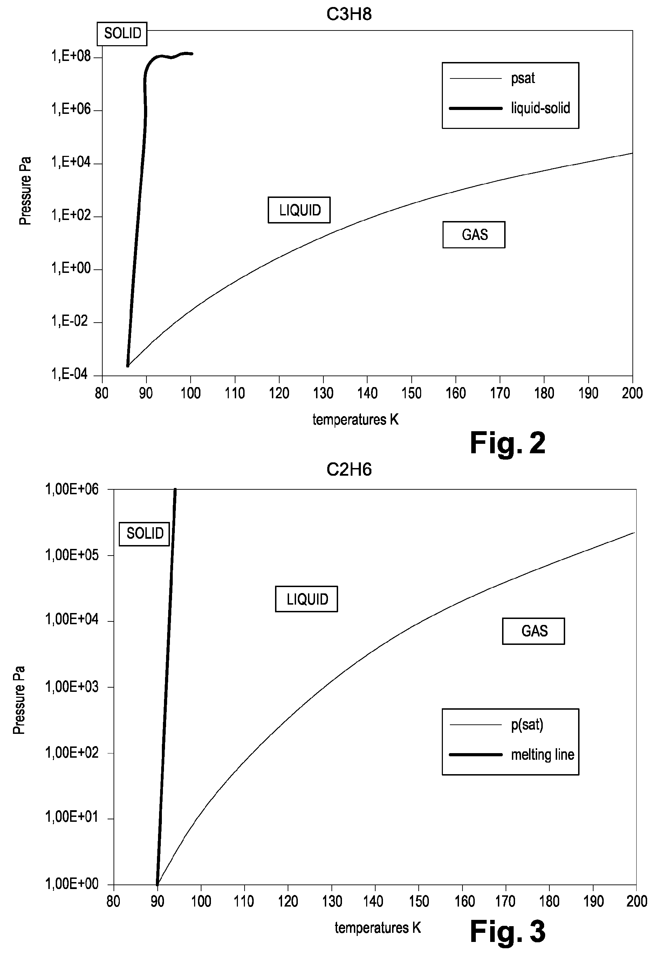

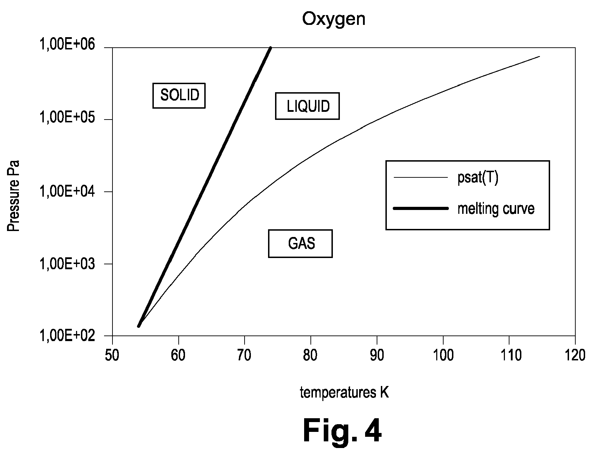

L'invention sera mieux comprise à la lecture de la description qui va suivre, donnée uniquement à titre d'exemple, et réalisée en relation avec les dessins annexés dans lesquels :
▪ la figure 1 est une vue en coupe schématique d'un cristal de laser et de son système de refroidissement associé selon l'invention ; et
▪ les figures 2 à 4 illustrent respectivement les diagrammes de phase du propane, de l'éthane et du dioxygène.

### DESCRIPTION DETAILLEE DE L'INVENTION

Sur la figure 1, une rondelle de cristal dopé **10** de laser cristallin est représentée avec son système de refroidissement **12**. La rondelle **10** prend notamment la forme d'un cylindre plat, par exemple de section circulaire d'un diamètre de 5 cm, ayant une première et une seconde faces principales **14**, **16** délimitées par une face latérale **18**.

Le système de refroidissement **12** comporte un support **20** formant une paroi d'une cavité hermétique **22**, dont le volume interne **24** est en communication avec deux conduits **26**, **28**. Le conduit **26** est connecté à un circuit d'alimentation en fluide de refroidissement (non représenté), par exemple de l'azote liquide, pour refroidir le support **20** dans une gamme de températures prédéterminée, avantageusement la gamme de température 70 K-200K pour laquelle l'efficacité du pompage optique est élevée, et l'autre conduit **28** est connecté à un circuit de pompage (non représenté) pour évacuer le fluide réchauffé par son contact avec le support **20**. De manière avantageuse, la face interne à la cavité **24** du support **20** est munie d'ailettes **29** de manière à augmenter la surface d'échange thermique avec le fluide présent dans la cavité **22**.

Le système **12** comporte également une couronne **30** logeant le cristal **10** de manière à laisser une portion **38** la première face principale **14** libre, fixée de manière hermétique à la face externe **32** du support **20** au moyen d'un ou plusieurs joints d'étanchéité **34**, par exemple un joint torique.

Le cristal **10** est par ailleurs maintenu dans la couronne **30** à une distance prédéterminée de la face **32** du support **20** au moyen d'un ou plusieurs joints souples **40** aménagés entre la face latérale **18** du cristal **10** et la portion de la couronne encadrant ladite face, et autorisant la flexion du cristal **10** selon son plan principal, comme par exemple un ou plusieurs joints toriques.

Un ou plusieurs joints d'étanchéité **44** sont par ailleurs aménagés, notamment entre la face principale **14** du cristal **10** et la couronne **30**, pour rendre hermétique la cavité **50** formée entre la deuxième face **16** du cristal **10** et la face **32** du support **20**. Les joints **40**, **44**, sont avantageusement constitués de polytétrafluoroéthylène (Téflon^{®}), ce qui permet de limiter sensiblement les efforts sur le cristal **10**.

La cavité **50** présente une épaisseur suffisante pour que le cristal **10** ne rentre pas au contact du support **20** lors de sa flexion sous l'effet du pompage optique. On sait par exemple qu'un cristal de 5 centimètres de diamètre subit usuellement une flexion maximale comprise entre 5 micromètres et 10 micromètres. La distance séparant le barreau **10** lorsqu'il est non fléchi et le support **20** est ainsi avantageusement choisie un peu supérieure à la flexion maximale du barreau **10**, par exemple égale à 10 micromètres, afin que le gaz liquéfié prennent la forme d'une lame de liquide d'épaisseur réduite afin de réduire un gradient thermique dans l'épaisseur du liquide, et donc augmenter l'efficacité du refroidissement du cristal **10**, et corolairement réduire la température absolue du cristal **10**. Le volume de la cavité **50** est par exemple choisi de l'ordre du millimètre cube, notamment compris entre 1 millimètre cube et 10 millimètre cube.

Un circuit d'alimentation de la cavité **50** avec un gaz de refroidissement sous pression est en outre prévu. Le circuit d'alimentation de la cavité **50** comporte par exemple un conduit **52** débouchant sur celle-ci, et un réservoir de stockage du gaz de refroidissement **54** connecté au conduit **52** au travers d'une vanne **56** commandant la distribution du gaz dans la cavité **50** depuis le réservoir **54**. Le réservoir est par exemple amovible pour pouvoir être remplacé et/ou est connecté à un circuit de distribution (non représenté) ou un réservoir de plus grand volume au travers d'une vanne **57** pour pouvoir être rechargé.

Le gaz de refroidissement est avantageusement du dioxygène (O₂), du propane (C₃H₈) ou de l'éthane (C₂H₆), dont la pression dans la cavité **50** est choisie de manière à ce que le gaz refroidi liquide demeure sous une forme liquide sur une large gamme de températures de fonctionnement du cristal **10** et reste ainsi en contact permanent avec le cristal **10** et le support **20,** quelle que soit la forme que prend le cristal dans ladite gamme de températures.

De manière avantageuse, la pression de stockage du gaz dans le réservoir **54** est également choisie de manière à ce que celui-ci présente un régime de sous saturation important, comme cela sera expliqué plus en détail par la suite. On notera que le gaz reste à l'état gazeux dans le réservoir **54** en fonction de la pression et de la température de celui-ci.

De manière avantageuse, le cristal **10**, la cavité **22** et les éléments de maintien du barreau **10** sur le support **20**, et optionnellement le réservoir **54** et la vanne **56**, sont agencés dans une enceinte hermétique **58** associée à un circuit de pompage **60** de son volume interne, ou « cryostat », afin d'éviter des phénomènes de condensation sur le cristal **10**. Une fenêtre transparente **62** est alors aménagée dans une paroi de l'enceinte **58** en regard de la face libre **14** du cristal **10** de manière à pouvoir illuminer le cristal **10** afin de mettre en oeuvre un pompage optique.

Un exemple de fonctionnement d'un laser équipé des éléments venant d'être décrits est le suivant. Dans une première étape, lorsque le pompage optique du laser n'est pas activé, l'enceinte **58** est mise sous vide. Une fois le régime d'équilibre atteint dans l'enceinte **58**, dans une deuxième étape, le liquide de refroidissement du support **20** est mis en circulation dans la cavité **22** de manière à régler la température du support **20** sur une température de fonctionnement prédéterminée de la gamme de températures de fonctionnement du laser, et notamment une température comprise entre 70K et 200K.

Dans une troisième étape, mise en oeuvre par exemple une fois que la température du support **20** est stabilisée, la vanne **56** est ouverte de manière à remplir la cavité **50** avec le gaz stocké dans le réservoir **54**. Ce dernier se liquéfie sous l'effet de la température régnant dans la cavité **50**.

Une fois la cavité **50** remplie de gaz liquéfié et la température de celui-ci stabilisée, dans une quatrième étape, le pompage optique du cristal **10** au travers de la fenêtre **62** est mis en oeuvre. La chaleur produite par le cristal **10** sous l'effet du pompage est alors évacuée par le gaz liquéfié de la cavité **50** vers le support **20** refroidi, puis est transférée au fluide de refroidissement circulant dans la cavité **22**. Par ailleurs, la cavité **50** étant reliée au réservoir au travers de la vanne **56** restée ouverte, la pression du gaz liquéfié dans la cavité demeure sensiblement constante. La température du cristal est ainsi régulée autour de la température de fonctionnement souhaitée.

Enfin, dans une cinquième étape mise en oeuvre une fois le laser désactivé, l'enceinte **58** est réchauffée et le vide cassé, la vanne **56** est fermée, et le réservoir changé ou rechargé via la vanne **57**.

Il va à présent être décrit le choix des caractéristiques du gaz liquéfié de la cavité **50**.

La pression du gaz liquéfié dans la cavité **50** est choisie de manière à garantir que le gaz liquéfié reste sous forme liquide dans une gamme de températures de fonctionnement du cristal **10**, par exemple une gamme d'au moins 10K autour de la température de fonctionnement souhaitée pour le cristal **10**, et que le gaz liquéfié soit en contact permanent avec le barreau **10** et le support **20**.

De manière avantageuse, la pression est également choisie inférieure ou égale à 2 ou 3 bars afin de ne pas appliquer une contrainte mécanique susceptible d'endommager le barreau de cristal **10**.

La pression du gaz liquéfié est également choisie pour que ce dernier présente une sous saturation en gaz. Comme cela est connu en soi, le flux thermique transféré par un liquide augmente avec sa sous saturation. En outre, lorsque le liquide n'est pas en présence de son gaz, la sous saturation dépend de la différence entre la température du liquide et la température de saturation du liquide, et la température de saturation dépend de la pression du liquide. Ainsi, lorsque la température du liquide est inférieure à la température de saturation, le liquide est en sous saturation, sous-saturation qui augmente à mesure que la température du liquide s'éloigne de la température de saturation, et donc que la pression augmente.

De préférence, la pression du gaz liquéfié dans la cavité **50** est choisie pour qu'en régime permanent, la température du gaz liquéfié, et donc la température du support **20** et du barreau **10**, soit inférieure d'au moins 30 K à la température de saturation, et de préférence inférieure à 50K. Notamment, une différence de 55 K permet d'évacuer efficacement avec de l'éthane des flux thermiques de 50W/cm². Le choix de cette différence de température est notamment dicté par la quantité de chaleur à évacuer.

La température de saturation étant liée à la pression du liquide, comme l'illustre par exemple les diagrammes de phase des figures 2, 3 et 4 respectivement du propane, de l'éthane et du dioxygène, il est aisée de déduire la pression appropriée en fonction de la différence de température souhaitée.

Par exemple, pour l'éthane, s'il est souhaité une différence entre la température de fonctionnement, et donc de l'éthane liquéfié, et la température de saturation de celui-ci égale à 35K, il est possible de choisir une température de fonctionnement égale à 95 K et une pression de 1000 Pa, ce qui correspond à une température de saturation de 130 K. De même si une différence de 55 K est souhaitée, il est possible de choisir une température de fonctionnement de 95 K et une pression de 10000 Pa, ce qui correspond à une température de saturation de l'éthane de 150K.

L'oxygène est préférentiellement utilisé pour des températures de fonctionnement du cristal **10** comprises entre 70K et 80 K.

L'éthane et le propane sont préférés pour des températures de fonctionnement du cristal **10** supérieures à 90 K, et de préférence 95K, ces gaz liquéfiés présentant une forte sous saturation jusqu'à 200K pour une pression de 10000 Pa pour l'éthane et une pression de 100000 Pa pour le propane. Le choix de l'un ou l'autre de ces gaz peut être réalisé en fonction de l'encombrement du réservoir et/ou de la contrainte appliquée par le gaz liquéfié sur le barreau de cristal, notamment la déformation que peut subir le barreau du fait de la pression exercée.

Le réservoir de stockage **54** est logé hors du système de refroidissement, et donc à température ambiante, par exemple de 300K. La pression dans le réservoir est choisie pour être celle souhaité dans la cavité **50**. Par contre, en raison de la température plus élevée, le réservoir **54** présente donc un volume plus élevé qui est choisi pour qu'il soit certain que le gaz liquéfié remplisse totalement la cavité **50**.

De manière avantageuse, le réservoir comprend, par mesure de sécurité, plus de gaz qu'il est nécessaire pour remplir la cavité **50** et présente ainsi un volume de sécurité supplémentaire. Avantageusement, le volume du réservoir correspond à deux fois la quantité de gaz liquéfié dans la cavité **50**. Par exemple, un volume de réservoir de 200 cm³ de propane à 300 K permet d'obtenir 75 cm³ de propane liquide à 5000 Pa.

Il a été décrit un cristal sous forme de rondelle. Bien entendu, d'autres formes de cristal sont possibles, comme par exemple un barreau.

## Revendications

1. Laser cristallin comportant un cristal dopé (10), et un système de refroidissement du cristal (10), où le système de refroidissement comporte :
▪ un support (20) comportant une première et une deuxième faces (29, 32) ;
▪ un dispositif de fixation (30, 40, 44) du cristal (10) sur la première face (32) du support (20) de manière à aménager une cavité hermétique (50) entre une première face (16) du cristal (10) et la première face (32) du support (20); et
▪ un dispositif de refroidissement (22, 26, 28) de la seconde face (29) du support (20),
**caractérisé en ce que** le système de refroidissement comporte en outre un circuit d'alimentation (52, 54, 56) de la cavité hermétique (50) avec un gaz liquéfié.

2. Laser cristallin selon la revendication 1, ***caractérisé* en ce que** le dispositif de fixation (30, 40, 44) comporte :
▪ une pièce (30) logeant le cristal (10) à distance de la première face (32) du support (20) et encadrant une deuxième face (18) du cristal (10); et
▪ un joint souple (40) logé entre la deuxième face (18) du cristal (10) et la pièce (30) logeant celui-ci, le joint étant apte à se déformer sous l'effet d'une flexion du cristal selon la première face (16) du cristal (10).

3. Laser cristallin selon la revendication 1 ou 2, ***caractérisé* en ce que** la pression du gaz liquéfié est choisie pour que le gaz liquéfié demeure liquide dans une gamme de température telle que la pression de saturation soit inférieure à 2 bars.

4. Laser cristallin selon la revendication 1, 2 ou 3, ***caractérisé* en ce que** le gaz compris dans le gaz liquéfié est en sous saturation.

5. Laser cristallin selon la revendication 4, ***caractérisé* en ce que** le circuit d'alimentation (52, 54, 56) de la cavité (50) est apte à commander la pression du gaz liquéfié de manière à définir une température de saturation dudit gaz supérieure d'au moins 50K à la température du gaz liquéfié.

6. Laser cristallin selon l'une quelconque des revendications précédentes, ***caractérisé* en ce que** le gaz liquéfié est du dioxygène, de l'éthane ou du propane.

7. Laser cristallin selon l'une quelconque des revendications précédentes, ***caractérisé* en ce que** le circuit d'alimentation (52, 54, 56) comporte un réservoir (54) de stockage du gaz, un conduit (52) débouchant dans la cavité hermétique (50) et dans le réservoir (54), et une vanne (56) agencée dans le conduit (52) pour commander l'alimentation en gaz de la cavité (50).

8. Laser cristallin selon l'une quelconque des revendications précédentes, ***caractérisé* en ce que** le dispositif de refroidissement (22, 26, 28) comporte :
▪ une cavité hermétique (22), la deuxième face (29) du support (20) formant une face de ladite cavité (22); et
▪ un circuit d'alimentation (26, 28) de la cavité (22) avec un fluide de température comprise entre 70 K et 200K.

9. Laser cristallin selon la revendication 8, ***caractérisé* en ce que** le fluide est du diazote liquide.

10. Laser cristallin selon l'une quelconque des revendications précédentes, ***caractérisé* en ce qu'**une troisième face du cristal est libre, et **en ce que** le laser comprend en outre :
▪ une enceinte hermétique (58), dans laquelle sont logés le cristal, le support et le dispositif de fixation ;
▪ un circuit de pompage (60) de l'enceinte (58); et
▪ une fenêtre (62) transparente à un rayonnement utilisé pour le pompage optique, formée dans une paroi de l'enceinte en regard de la troisième face du cristal.

11. Laser cristallin selon l'une quelconque des revendications précédentes, ***caractérisé* en ce que** l'épaisseur de la cavité hermétique entre le cristal et le support est inférieure au millimètre, et de préférence inférieure à 15 micromètres.

## Patentansprüche

1. Laserkristall, der einen dotierten Kristall (10) und ein Kühlsystem für den Kristall (10) umfasst, wobei das Kühlsystem:
• einen Träger (20) mit einer ersten und zweiten Seite (29, 32);
• eine Befestigungsvorrichtung (30, 40, 44) für den Kristall (10) auf der ersten Seite (32) des Trägers (20) umfasst, so dass eine hermetische Vertiefung (50) zwischen einer ersten Seite (16) des Kristalls (10) und der ersten Seite (32) des Trägers (20) gebildet wird;
und
• eine Kühlvorrichtung (22, 26, 28) der zweiten Seite (29) des Trägers (20), **dadurch gekennzeichnet, dass** das Kühlsystem außerdem einen Kreislauf (52, 54, 56) zur Versorgung der hermetischen Vertiefung (50) mit einem Flüssiggas umfasst.

2. Laserkristall gemäß Anspruch 1, **dadurch gekennzeichnet, dass** die Befestigungsvorrichtung (30, 40, 44):
• ein Teil (30) zur Unterbringung des Kristalls (10), das von der ersten Seite (32) des Trägers (20) entfernt ist und das eine zweite Seite (18) des Kristalls (10) umrahmt; und
• eine flexible Dichtung (40), die zwischen der zweiten Seite (18) des Kristalls (10) und dem Teil (30) untergebracht ist, in dem er untergebracht ist, umfasst, wobei die Dichtung in der Lage ist, sich unter dem Einfluss einer Biegung des Kristalls entlang der ersten Seite (16) des Kristalls (10) zu verformen.

3. Laserkristall gemäß Anspruch 1 oder 2, **dadurch gekennzeichnet, dass** der Druck des Flüssiggases so gewählt wird, dass das Flüssiggas innerhalb eines Temperaturbereichs flüssig bleibt, so dass der Sättigungsdruck unter 2 Bar liegt.

4. Laserkristall gemäß Anspruch 1, 2 oder 3, **dadurch gekennzeichnet, dass** das im Flüssiggas enthaltene Gas sich in Untersättigung befindet.

5. Laserkristall gemäß Anspruch 4, **dadurch gekennzeichnet, dass** der Kreislauf (52, 54, 56) zur Versorgung der Vertiefung (50) den Druck des Flüssiggases steuern kann, so dass eine Sättigungstemperatur dieses Gases von über mindestens 50 K zur Temperatur des Flüssiggases definiert wird.

6. Laserkristall nach irgendeinem der vorangehenden Ansprüche, **dadurch gekennzeichnet, dass** es sich bei dem Flüssiggas um Disauerstoff, Ethan oder Propan handelt.

7. Laserkristall nach irgendeinem der vorangehenden Ansprüche, **dadurch gekennzeichnet, dass** der Versorgungskreislauf (52, 54, 56) einen Behälter (54) zur Lagerung von Gas, eine Leitung (52), die in die hermetische Vertiefung (50) und in den Behälter (54) mündet, sowie ein Ventil (56) enthält, das in der Leitung (52) vorgesehen ist, um die Gasversorgung der Vertiefung (50) zu steuern.

8. Laserkristall nach irgendeinem der vorangehenden Ansprüche, **dadurch gekennzeichnet, dass** die Kühlvorrichtung (22, 26, 28):
• eine hermetische Vertiefung (22), wobei die zweite Seite (29) des Trägers (20) eine Seite dieser Vertiefung (22), bildet; und
• einen Kreislauf (26, 28) zur Versorgung der Vertiefung (22) mit einer Flüssigkeit mit einer Temperatur zwischen 70 K und 200 K umfasst.

9. Laserkristall gemäß Anspruch 8, **dadurch gekennzeichnet, dass** es sich bei der Flüssigkeit um flüssigen Distickstoff handelt.

10. Laserkristall nach irgendeinem der vorangehenden Ansprüche, **dadurch gekennzeichnet, dass** eine dritte Seite des Kristalls frei ist und dass der Laser außerdem:
• ein hermetisches Gehäuse (58), in dem der Kristall, der Träger und die Befestigungsvorrichtung untergebracht sind;
• einen Pumpenkreislauf (60) für das Gehäuse (58); und
• ein Fenster (62), das gegenüber der Strahlung, die zum optischen Pumpen verwendet wird, transparent ist und die in einer gegenüber der dritten Seite des Kristalls liegenden Gehäusewand vorgesehen ist, enthält.

11. Laserkristall nach irgendeinem der vorangehenden Ansprüche, **dadurch gekennzeichnet, dass** die Dicke der hermetischen Vertiefung zwischen dem Kristall und dem Träger kleiner als 15 Mikrometer ist.

## Claims

1. A crystal laser comprising a doped crystal (10), and a system for cooling the crystal (10), wherein the cooling system comprises:
▪ a support (20) comprising a first and a second surfaces (29, 32);
▪ a device (30, 40, 44) for fastening the crystal (10) to the first surface (32) of the support (20) to form a tight cavity (50) between a first surface (16) of the crystal (10) and the first surface (32) of the support (20); and
▪ a device (22, 26, 28) for cooling the second surface (29) of the support (20).; **characterized in that** the cooling system further comprises a circuit (52, 54, 56) for supplying the tight cavity (50) with a liquefied gas.

2. The crystal laser of claim 1, wherein the fastening device (30, 40, 44) comprises:
▪ an element (30) housing the crystal (10) at a distance from the first surface (32) of the support (20) and surrounding a second surface (18) of the crystal (10); and
▪ a flexible joint (40) housed between the second surface (18) of the crystal (10) and the element (30) housing it, the joint being capable of deforming under the effect of a bending of the crystal on the second surface (16) of the crystal (10).

3. The crystal laser of claim 1 or 2, wherein the liquefied gas pressure is selected so that the liquefied gas remains liquid in a temperature range such that the saturation pressure is smaller than 2 bars.

4. The crystal laser of claim 1, 2, or 3, wherein the gas comprised in the liquefied gas is in sub-saturation.

5. The crystal laser of claim 4, wherein the circuit (52, 54, 56) for supplying the cavity (50) is capable of controlling the liquefied gas pressure to define a saturation temperature of said gas greater by at least 50 K than the temperature of the liquefied gas.

6. The crystal laser of any of the foregoing claims, wherein the liquefied gas is dioxygen, ethane, or propane.

7. The crystal laser of any of the foregoing claims, wherein the supply circuit (52, 54, 56) comprises a gas storage tank (54), a duct (52) emerging into the tight cavity (50) and into the tank (54), and a valve (56) arranged in the duct (52) to control the supplying of the cavity (50) with gas.

8. The crystal laser of any of the foregoing claims, wherein the cooling device (22, 26, 28) comprises:
▪ a tight cavity (22), the second surface (29) of the support (20) forming a surface of said cavity (22); and
▪ a circuit (26, 28) for supplying the cavity (22) with a fluid having a temperature in the range from 70 K to 200 K.

9. The crystal laser of claim 8, wherein the fluid is liquid dinitrogen.

10. The crystal laser of any of the foregoing claims, wherein a third surface of the crystal is free, and wherein the laser further comprises:
▪ a tight enclosure (58), having the crystal, the support, and the fastening device housed therein;
▪ a circuit (60) for pumping the enclosure (58); and
▪ a window (62) transparent to a radiation used for the optical pumping, formed in a wall of the enclosure facing the third surface of the crystal.

11. The crystal laser of any of the foregoing claims, wherein the thickness of the tight cavity between the crystal and the support is smaller than one millimeter, and preferably smaller than 15 micrometers.
